# FASCICULE DE BREVET EUROPEEN

(11) **EP 3 390 318 B1**
(45) Date de publication et mention de la délivrance du brevet: **18.08.2021**
(21) Numéro de dépôt: 16825507.3
(22) Date de dépôt: 14.12.2016
(51) Int. Cl.: C03C 17/42, C03C 17/38

(54) **VITRAGE DE CONTROLE THERMIQUE MUNI D'UN FILM POLYMERE PROTECTEUR**
WÄRMEREGELUNGSVERGLASUNG MIT EINER POLYMERSCHUTZFOLIE
THERMAL CONTROL GLAZING WITH A PROTECTIVE POLYMER FILM

(30) Priorité: 15.12.2015 FR 1562371
(43) Date de publication de la demande: 24.10.2018
(73) Titulaire: SAINT-GOBAIN GLASS FRANCE, 92400 Courbevoie (FR)
(72) Inventeur: DEVYS, Lucie, 75013 Paris (FR); WANAKULE, Nisita, 75019 Paris (FR)
(74) Mandataire: Saint-Gobain Recherche
(86) Numéro de dépôt international: PCT/FR2016/053410
(87) Numéro de publication internationale: WO 2017/103465

(56) Documents cités:
- WO-A1-2013/089185
- US-A- 2 595 800

## Description

L'invention concerne les vitrages comprenant un empilement de couches minces agissant sur le rayonnement infrarouge IR, du type solaire (proche IR) ou thermique (IR lointain).

Un vitrage selon l'invention est plus particulièrement adapté pour équiper des bâtiments, même s'il n'y est pas limité et que notamment on puisse également l'utiliser dans le domaine automobile, en particulier comme vitre latérale, toit ouvrant ou encore lunette arrière. Il est également apte à être utilisé comme vitrine ou porte de réfrigérateur à fonction antibuée (anticondensation), notamment pour équiper les présentoirs des produits congelés en supermarché.

De façon connue, en sélectionnant la nature chimique, les épaisseurs et la succession des couches minces constituant l'empilement, on peut agir de façon significative sur la quantité d'énergie du rayonnement solaire entrant ou sortant d'un local ou d'un habitacle. En particulier, un tel vitrage permet d'éviter à l'intérieur de ceux-ci un échauffement excessif en été et contribue ainsi à limiter la consommation d'énergie nécessaire à leur climatisation. Selon un autre aspect de l'invention, celle-ci se rapporte également à des vitrages d'isolation thermique, souvent appelés vitrages low-e ou basse émissivité dans le domaine, plus particulièrement destinés à l'isolation thermique des bâtiments ou véhicules. La fonction low-e peut également avantageusement être utilisée dans les parties vitrées les appareils réfrigérés du type vitrine ou porte de réfrigérateur à fonction antibuée.

Ces vitrages à couches sont soumis à un certain nombre de contraintes : en ce qui concerne les vitrages, les couches employées doivent être, en premier lieu, suffisamment filtrantes vis-à-vis du rayonnement solaire, c'est-à-dire qu'elles doivent permettre l'isolation thermique en laissant toutefois passer au moins une partie de la lumière, telle que mesurée par la transmission lumineuse T_{L}. En outre, ces performances thermiques doivent préserver l'aspect optique, l'esthétisme du vitrage : il est ainsi souhaitable de pouvoir moduler le niveau de transmission lumineuse du substrat, tout en gardant une couleur jugée esthétique et de préférence sensiblement neutre, tout particulièrement en réflexion extérieure et/ou intérieure.

Selon un autre aspect essentiel, ces couches doivent aussi être suffisamment durables, et cela d'autant plus si, dans le vitrage une fois monté, elles sont positionnées sur l'une des faces externes (intérieure ou extérieure) du vitrage (par opposition aux faces internes, tournées vers la lame de gaz intercalaire d'un double vitrage par exemple ou encore vers le feuillet thermoplastique d'un vitrage feuilleté).

On connait aujourd'hui de très nombreux empilements dits de « contrôle thermique », c'est-à-dire permettant de réguler le flux de chaleur entrant ou sortant des surfaces vitrées équipant le bâtiment ou de l'habitacle.

Ils sont regroupés sous la désignation de vitrage d'isolation thermique. Ils sont commercialisés et utilisés essentiellement selon deux catégories :
- soit pour assurer essentiellement une protection de l'habitation du rayonnement solaire et en éviter une surchauffe, de tels vitrages étant qualifiés dans le métier de vitrages antisolaires,
- soit pour assurer essentiellement une isolation thermique de l'habitation et éviter les déperditions de chaleur, ces vitrages étant alors qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle.

Par isolant thermique, on entend ainsi un vitrage muni d'au moins une couche fonctionnelle lui conférant une déperdition énergétique diminuée, ladite couche présentant des propriétés de réflexion du rayonnement IR thermique (aussi appelé infrarouge moyen) compris entre 3 et 50 micromètres. Dans certains pays, les normes impliquent que les vitrages présentent des propriétés à la fois antisolaire et d'isolation thermique.

De façon bien connue, par exemple décrite dans la publication de référence « Les techniques de l'ingénieur, Vitrage à isolation thermique renforcée, C3635 (2004)», une telle propriété de réflexion est directement fonction de l'émissivité de la face du vitrage munie de l'empilement comprenant la ou les couches fonctionnelles.

D'une manière générale, toutes les caractéristiques lumineuses et thermiques présentées dans la présente description sont obtenues selon les principes et méthodes décrits dans les normes internationales ISO 9050 (2003) et ISO 10292 (1994) ou encore NF EN 12898 : 2001, se rapportant à la détermination des caractéristiques lumineuses et énergétiques des vitrages utilisés dans le verre pour la construction.

Associés au substrat verrier, ces revêtements doivent également de préférence être esthétiquement plaisants, c'est-à-dire que le vitrage muni de son empilement doit présenter une colorimétrie, en transmission comme en réflexion suffisamment neutre pour ne pas incommoder les utilisateurs, ou alternativement une teinte légèrement bleue ou verte, notamment dans le domaine du bâtiment. Par couleur neutre, on entend au sens de la présente invention, dans le système de colorimétrie CIE LAB (L*, a*, b*), une valeur absolue a* et b* inférieure ou égale à 10.

Les empilements les plus performants commercialisés à l'heure actuelle pour résoudre les problèmes précédents incorporent une couche fonctionnelle (c'est-à-dire responsable des propriétés de réflexion du rayonnement IR) métallique en métal précieux du type or ou argent ou encore en cuivre (ou en un alliage entre ces métaux), en particulier en argent, fonctionnant essentiellement sur le mode de la réflexion d'une majeure partie du rayonnement IR (infrarouge) incident. Ces empilements peuvent utilisés avantageusement en tant que vitrages du type bas émissifs (ou low-e en anglais) pour l'isolation thermique des bâtiments mais peuvent également, de façon plus limités, être utilisés comme vitrage de contrôle solaire.

Ces couches sont cependant très sensibles à l'humidité et sont donc exclusivement utilisées dans des doubles vitrages, en face 2 ou 3 de celui-ci, pour être protégées de l'humidité. Il est admis aujourd'hui qu'il n'est pas possible de déposer de telles couches sur des vitrages simples (aussi appelés monolithiques) ou encore sur la face la plus extérieure d'un vitrage multiple (appelée face 1 par convention) ou encore sur la face intérieure d'un vitrage multiple (appelée face 4 par convention pour un double vitrage) car celles-ci se dégradent très rapidement et s'oxyde sous l'action de l'humidité extérieure ou même présente en intérieur. De telles couches ne sont donc pas durables en face externe et doivent nécessairement être déposées en face interne d'un vitrage multiple. Même si elle n'est pas limitée à de telles couches, l'un des objets principaux de la présente invention est de proposer des vitrages munis d'empilements de couches agissant sur la quantité de chaleur traversant le vitrage et dont au moins l'une est en cuivre ou en métal précieux Ag ou Au), plus particulièrement en argent.

Dans le but de permettre le dépôt d'un empilement comprenant au moins une couche en argent sur une face extérieure (interne ou externe) il a déjà été proposé dans la littérature de le protéger par un film en matière plastique polymère, qui recouvre ledit empilement après son dépôt. On peut citer par exemple les demandes suivantes :
La demande WO 2013089185 décrit une configuration selon laquelle on utilise un polymère du type polyacrylonitrile (PAN) ou polymethacrylonitrile (PMAN), déposé sur un empilement réfléchissant les IR, lui-même étant disposé sur un substrat. Il est indiqué que le polymère permet de protéger l'empilement en augmentant sa résistance à l'abrasion et sa résistance mécanique, notamment lorsqu'il est soumis à des contraintes nées de variations thermiques extérieures.

La demande de brevet EP2685294 décrit alternativement l'utilisation d'un film plastique protecteur en polycyclooléfine dans le but de rendre un empilement externe réfléchissant les IR résistant mécaniquement.

La demande de brevet Française FR2414114 décrit l'utilisation comme couche protectrice d'un polymère polyéthylène (PE), polypropylène (PP) ou polyacrylonitrile (PAN). US-2595800 décrit une miroir ayant une couche protectrice en copolymère ST-BU.

Le choix du matériau polymère protecteur, selon ces documents de l'art, est guidé par la qualité de la protection mécanique et la résistance chimique, notamment à la corrosion, qu'il confère à l'empilement.

Selon la présente invention, d'autres critères apparaissent également nécessaires pour la bonne mise en œuvre du film protecteur.

En tout premier lieu, le film protecteur ne doit pas perturber sensiblement les propriétés optiques et énergétiques initiales du vitrage dans lequel il est incorporé et en particulier ceux conférés par l'empilement de couches minces agissant sur la quantité de chaleur traversant le vitrage (c'est-à-dire à fonction low-e ou antisolaire).

Un autre paramètre essentiel réside dans la facilité avec laquelle le film protecteur peut être déposé sur l'empilement et sa compatibilité chimique avec celui-ci et en particulier avec la couche de matériau diélectrique la plus externe dudit empilement, le plus souvent une couche d'oxyde tel qu'un oxyde de silicium, de titane, d'étain, de zinc, ou encore d'un mélange de zinc et d'étain. Une compatibilité insuffisante entre le polymère est la couche externe de l'empilement se traduit en particulier par un arrachement probable dudit polymère à brève ou longue échéance et la perte des propriétés, notamment de contrôle thermique, du vitrage.

La présente invention a ainsi pour objet de proposer un vitrage utilisable pour le contrôle thermique, notamment un vitrage antisolaire ou un vitrage dit de basse émissivité, ou encore un vitrage pour vitrine ou porte de réfrigérateur, incorporant notamment une couche métallique telle que précédemment citée dans un empilement low-e ou antisolaire, qui peut être disposé sur une des faces externes dudit vitrage tout en étant durable dans le temps.

La présente invention se rapporte ainsi aux vitrages de contrôle thermique dans leur ensemble, c'est-à-dire aussi bien aux vitrages antisolaires qu'aux vitrages d'isolation thermique.

Plus précisément, la présente invention se rapporte dans sa forme la plus générale à un vitrage comprenant au moins un substrat muni d'un empilement de couches minces réfléchissant le rayonnement infrarouge, par exemple le rayonnement IR et/ou thermique, dans lequel ledit empilement est recouvert d'un film polymère protecteur en copolymère styrène-butadiène (PSB), l'épaisseur du film polymère étant inférieure à 10 micromètres.

Selon des modes préférés mais non limitatifs de réalisation de la présente invention :
- Ledit copolymère styrène-butadiène est un copolymère constitué de blocs successifs de polystyrène et de polybutadiène.
- Les blocs polybutadiène représentent entre 60 et 80% du poids du polymère.
- Ledit copolymère est un polymère en bloc et de préférence encore est du type poly(styrène-b-butadiène-b-styrène) (souvent appelé SBS) et répond à la formule développée suivante : 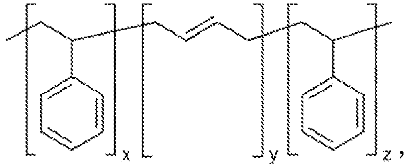 dans laquelle :
   100 < x < 1000
   1000 < y < 5000
   100 < z < 1000, avec de préférence x = z.
- Le poids moléculaire du copolymère est supérieur à 100 000 g/mol et de préférence est compris entre 100 000 et 200 000.
- Le substrat comprend du verre et de préférence encore est une feuille de verre.
- L'empilement de couches minces réfléchissant le rayonnement infrarouge comprend au moins une couche métallique choisie parmi l'argent, le cuivre, l'or et leurs alliages, de préférence encore l'argent ou un alliage à base d'argent (c'est-à-dire comprenant plus de 80% atomique d'argent).
- L'empilement de couches minces réfléchissant le rayonnement infrarouge comprend comme couche supérieure une couche diélectrique d'oxyde, de nitrure ou d'oxynitrure, de préférence d'oxyde, sur laquelle est déposé directement le film protecteur externe.
- Ladite couche supérieure est un oxyde choisi parmi les oxydes de zinc, de silicium, d'étain, de titane, de zinc et d'étain.
- Ladite couche supérieure est un nitrure de silicium et/ou d'aluminium.
- L'épaisseur du film polymère en copolymère styrène-butadiène est inférieure à 7 micromètres.
- L'épaisseur du film polymère en copolymère styrène-butadiène est supérieure ou égale à environ 1 micromètre et de préférence est supérieure ou égale à 2 micromètres.
- Ledit vitrage est un vitrage simple comprenant un unique substrat verrier, sur lequel ledit empilement de couches minces réfléchissant le rayonnement infrarouge, recouvert d'un film polymère protecteur en copolymère styrène-butadiène, est disposé sur une face externe du vitrage.
- Ledit vitrage est un vitrage multiple, comprenant au moins deux substrats verriers, l'empilement de couches minces réfléchissant le rayonnement infrarouge, recouvert d'un film polymère protecteur en copolymère styrène-butadiène, est disposé sur une face externe du vitrage.
- Le vitrage multiple comprend sur une face externe un premier empilement de couches minces réfléchissant le rayonnement infrarouge, recouvert d'un film polymère protecteur en copolymère styrène-butadiène et sur une face interne un deuxième empilement de couches minces réfléchissant le rayonnement infrarouge.

L'invention se rapporte aussi à une utilisation d'un vitrage tel que décrit précédemment en tant que vitrage à fonction anticondensation, dans lequel ledit empilement de couches minces réfléchissant le rayonnement infrarouge recouvert d'un film polymère protecteur en copolymère styrène-butadiène étant disposé sur une face externe du vitrage.

Le vitrage décrit précédemment peut également être utilisé en tant que vitrage à fonction antisolaire ou de contrôle thermique, ledit empilement de couches minces réfléchissant le rayonnement infrarouge recouvert d'un film polymère protecteur en copolymère styrène-butadiène étant disposé sur la face intérieure du vitrage (c'est-à-dire la face externe du vitrage orientée vers l'intérieur de l'habitation ou de l'habitacle).

On donne les définitions suivantes :
Par rayonnement infrarouge, on entend le rayonnement IR proche ou solaire de longueur d'onde comprise entre 0,78 et 3 micromètres et le rayonnement IR thermique (ou moyen) de longueur d'onde comprise entre 3 et 50 micromètres.

Un vitrage antisolaire (ou de contrôle solaire) a pour fonction de réfléchir une majeure partie du proche IR issu du rayonnement solaire pour éviter le réchauffement de l'habitation ou de l'habitacle.

Un vitrage de contrôle thermique a pour fonction de réfléchir une majeure partie de l'IR thermique pour éviter la déperdition de chaleur de l'habitation/de l'habitacle vers l'extérieur.

Par polymère en copolymère styrène-butadiène, on entend tout composé obtenu par copolymérisation du butadiène et du styrène selon les techniques classiques, du type notamment décrit dans la publication de référence « Techniques de l'ingénieur, Caoutchouc styrène-butadiène (SBR) : élaboration et propriétés, Ref 0992, 20 Juin 2014 ».

Selon une première configuration d'un vitrage selon l'invention, le vitrage est simple, c'est-à-dire qu'il comprend un unique substrat verrier sur lequel est disposé un empilement agissant sur le rayonnement infrarouge incorporant une succession de couches minces dont une couche d'argent, d'épaisseur par exemple de l'ordre de 5 à 20 nanomètres, réfléchissant les infrarouges. La couche d'argent comprend au-dessus et en dessous dans l'empilement des couches de matériau diélectrique d'oxydes ou de nitrure de silicium. Sur l'empilement, on dépose un film polymère en copolymère styrène-butadiène, au sens décrit précédemment. Le film polymère en copolymère styrène-butadiène permet d'exposer l'empilement sur une face externe (intérieur ou extérieur) du vitrage et d'en garantir sa durabilité, comme il sera démontré par la suite. Dans un tel vitrage utilisé par exemple comme fenêtre pour le bâtiment, la face sur laquelle sont déposés l'empilement et le film protecteur est tourné vers l'intérieur du bâtiment. Cette configuration permet l'utilisation du vitrage simple comme vitrage antisolaire ou encore comme vitrage Low-e.

Selon une seconde configuration d'un vitrage selon l'invention, le vitrage est double ou triple, c'est-à-dire qu'il comprend deux ou trois substrats verriers séparés par une lame de gaz ou encore un feuillet thermoplastique du type PVB. Sur une face externe du vitrage multiple est disposé l'empilement 2 agissant sur le rayonnement infrarouge. Sur l'empilement, on dépose un film polymère en copolymère styrène-butadiène, au sens décrit précédemment. Le film polymère en copolymère styrène-butadiène permet d'exposer l'empilement sur une face externe (vers intérieur ou vers l'extérieur) du vitrage et d'en garantir sa durabilité, comme il sera démontré par la suite.

Selon une première réalisation d'un tel vitrage, par exemple comme fenêtre pour le bâtiment, l'empilement est présent sur la face 1 du vitrage multiple, le film protecteur étant tourné vers l'extérieur du bâtiment (conventionnellement, on numérote les faces des substrats verriers d'un vitrage simple ou multiple depuis l'extérieur vers l'intérieur de l'habitacle/du local qu'il équipe). Cette configuration permet de limiter la condensation sur ladite face extérieure d'un vitrage multiple, en particulier les triples vitrages très isolants.

Selon une deuxième réalisation d'un tel vitrage comme fenêtre pour le bâtiment, celui est disposé sur la face 4 du double vitrage ou la face 6 d'un triple vitrage, de telle façon que la face sur laquelle sont déposés l'empilement et le film protecteur est celle tournée vers l'intérieur du bâtiment. Cette configuration permet l'utilisation du vitrage multiple comme vitrage anti-solaire ou d'isolation thermique (Low-e). Une configuration particulièrement intéressante d'un double vitrage selon ce mode consiste en une combinaison de ce premier empilement déposé en face 4 avec un autre empilement réfléchissant les infrarouges, positionné cette fois sur la face 2 ou la face 3 du double vitrage.

Bien entendu, il serait également possible de disposer l'empilement et le film sur les deux faces extérieures d'un vitrage multiple pour obtenir un vitrage cumulant les fonctions Low-e/ antisolaire/anticondensation.

Si l'application plus particulièrement décrite précédemment est le vitrage pour le bâtiment, il est clair que d'autres applications sont envisageables, notamment dans les vitrages de véhicules, comme les verres latéraux, le toit-auto, la lunette arrière ou encore les vitrines ou les portes vitrées de congélateurs.

Les avantages de la présente invention sont illustrés à l'aide des exemples non limitatifs qui suivent, selon l'invention et comparatifs.

**REFERENCE** : On utilise un substrat en verre clair de 4 mm d'épaisseur de type Planilux commercialisé par la société Saint-Gobain Glass France.

Sur le substrat un empilement de couches est déposé par les techniques bien connues de pulvérisation cathodique assistée par champ magnétique. L'empilement déposé est conforme à l'exemple 4 de la demande WO2007/101964 A1 et comprend une couche d'argent de 10 nm d'épaisseur. Additionnellement, on dépose sur cet empilement une surcouche d'épaisseur inférieure à nanomètres de TiO₂.

Le vitrage ainsi obtenu constitue la référence pour tous les exemples qui suivent : sur ce vitrage de référence, pour comparaison, on dépose différents polymères selon les protocoles expérimentaux suivants :

### EXEMPLE 1 : Dépôt d'un film de Polysilazane inorganique de deux ou cinq micromètres :

Dans cet exemple, on réalise à la surface du vitrage de référence, le dépôt d'un film de perhydropolysilazane à partir d'une résine NN-120 commercialisée par la société Clariant, par les techniques d'enduction centrifuge (ou spin-coating selon le terme anglo-saxon) en utilisant comme solvant de l'éther dibutylique. On ajuste dans le dispositif de centrifugation (spinner) la vitesse angulaire et la concentration du polymère pour l'obtention d'une couche d'épaisseur de l'ordre de 2 ou 5 micromètres.

### EXEMPLE 2 : Dépôt d'un film de Polysilazane organique de un ou cinq micromètres :

Dans cet exemple, on réalise à la surface du substrat le dépôt d'un film de polydiméthylsilazane à partir d'une résine CAG-37 commercialisée par la société Clariant, par les techniques d'enduction centrifuge (ou spin-coating selon le terme anglo-saxon) en utilisant comme solvant un mélange d'acétate de n-butyle et de toluène selon un rapport volumique 98 : 2. On ajuste dans le dispositif de centrifugation (spinner) la vitesse angulaire et la concentration du polymère pour l'obtention d'une couche d'épaisseur de l'ordre de 1 ou 5 micromètres.

### EXEMPLE 3 : Dépôt d'un film de copolymère de styrène-butadiène (PSB) de trois micromètres :

Dans cet exemple, on réalise le dépôt d'un film de PSB à la surface du substrat par les techniques d'enduction centrifuge (ou spin-coating selon le terme anglo-saxon) en utilisant une résine de polystyrène-block-polybutadiène-block-polystyrène commercialisée par la société Sigma-Aldrich sous la référence 182877 et comprenant 30 pourcents poids de styrène. La résine est préalablement dissous dans le xylène (solvant) et filtrée à 0.2 µm. On ajuste dans le dispositif de centrifugation (spinner) la vitesse angulaire et la concentration de la résine dans le solvant pour l'obtention d'une couche d'épaisseur de l'ordre de 3 micromètres.

### EXEMPLE 4 : Dépôt d'un film de copolymère de styrène-butadiène de dix micromètres :

On procède comme pour l'exemple 3 mais la vitesse angulaire et la concentration de la résine sont ajustées selon les techniques de l'art pour l'obtention d'une couche d'épaisseur de l'ordre de 10 micromètres.

### EXEMPLE 5 : Dépôt d'un film de polyacrylonitrile (PAN) de cinq micromètres :

Dans cet exemple, on réalise à la surface du substrat le dépôt d'un film de polyacrylonitrile (PAN) à partir d'une résine PAN commercialisée par la société Sigma-Aldrich, par les techniques d'enduction centrifuge (ou spin-coating selon le terme anglo-saxon) en utilisant comme solvant du DMSO. On ajuste dans le dispositif de centrifugation (spinner) la vitesse angulaire et la concentration du polymère pour l'obtention d'une couche d'épaisseur de l'ordre de 5 micromètres.

### EXEMPLE 6 : Dépôt d'un film de polyéthylène (PE)

Les essais de dépôt par spin-coating effectués par la société déposante n'ont pas permis d'obtenir un film uniforme de polyéthylène directement à la surface du substrat verrier, au-dessus de l'empilement de couches minces en matériau inorganique.

Les échantillons selon les exemples 1 à 6 sont ensuite soumis aux tests suivants pour mesurer leurs performances optiques, énergétiques ainsi que leur durabilité.

Les propriétés optiques, énergétiques et la durabilité des différents vitrages sont mesurées selon les critères suivants :
- Transmission T_{L} : transmission lumineuse en % selon l'illuminant D₆₅, coté couche, selon les critères définis dans la norme internationale ISO 9050 : 2003.
- Emissivité normale : elle est calculée selon les critères définis dans la norme internationale NF EN 12898 : 2001.
- Flou : Par flou, mesuré en pourcentage, il est entendu au sens de la présente invention la perte par diffusion de la lumière, c'est-à-dire de façon classique le rapport entre la partie diffusée de la lumière (fraction diffuse ou T_{d}) sur la lumière directement transmise au travers du vitrage (T_{L}), généralement exprimée en pourcentages. La transmission diffuse mesure ainsi la fraction lumière diffusée par les couches déposées à la surface du substrat de verre. Le flou peut classiquement être mesuré par des techniques de spectroscopie, l'intégration sur tout le domaine du visible (380-780 nm) permettant la détermination de la transmission normale T_{L} et de la transmission diffuse T_{d}. Une telle mesure peut également être obtenue par l'utilisation d'un Hazemeter. On considère qu'un vitrage reste transparent si son flou reste inférieur à 10 % et de préférence est inférieur à 5% ou même inférieur à 1% lors d'une mesure avec un Hazemeter. L'appareil utilisé est un dispositif « Haze-Gard ®» commercialisé par la société BYK-Gardner.
- Test SO₂ : il s'agit d'un premier test de durabilité de l'empilement protégé par le film aux agressions acides (vapeur de SO₂). Le test pratiqué est conforme à celui décrit dans la norme EN1096-2 :2001, annexe C. On vérifie d'abord la conformité du vitrage avec la norme, notamment sur un plan visuel. On mesure également la variation d'émissivité (Δε) et de la transmission lumineuse (ΔTL) après le test.
- Test BSN : il s'agit d'un deuxième test de durabilité de l'empilement protégé par le film aux agressions salines. Le test pratiqué est conforme à celui décrit dans la norme EN 1096-2 :2001, annexe D. On mesure ensuite la conformité du vitrage avec la norme (points 4 et 7 de la norme). On mesure également selon l'invention la variation d'émissivité (Δε), la variation de la transmission lumineuse (ΔT_{L}) et de la couleur (ΔE*) et on vérifie l'aspect visuel selon les conditions de la norme après 4, 11 et 15 et jusqu'à 50 jours de tests si nécessaire.
- Test HH : Ce test est un test de résistance à la chaleur humide selon la norme EN 1096-2 :2001, annexe B. Le test est réalisé, dans le cadre de la présente invention, sur une durée de 50 jours. Il permet de déterminer si l'échantillon est apte à supporter les effets de la pénétration de l'humidité à long terme. Les conditions de sévérité suivantes sont appliquées :
   - température de l'essai : 50°C ± 1,5°C ;
   - humidité relative : 90% ± 5% ;
   - durée de l'essai : 50 jours.

Aucune apparition de défauts visuels majeurs ne doit être détectée après le test (aspect visuel). L'échantillon est alors déclaré conforme (OK).
- On définit ΔE* de la façon suivante :
   ΔE* = (ΔL*² + Δa*² + Δb*²)^{1/2}, avec ΔL*, Δa* et Δb* la différence dans les mesures de L*, a* et b* (dans le système international Lab) avant et après le test SO₂ ou BSN.
- Test de résistance à l'arrachement : ce test mesure la force d'adhésion entre le film de polymère protecteur et l'empilement de couches. Le test pratiqué est conforme à celui décrit dans la norme NF EN ISO 2409 d'Aout 2007. La classification reportée dans le tableau qui suit est conforme à celle décrit dans le tableau 1 de la norme. Une classification 0 indique une forte adhésion du film, un indice 5 (max) indique une très faible résistance du film à l'arrachement.

Dans le tableau 1 ci-après on a reporté l'ensemble des résultats obtenus :

**Tableau 1**

| | Epaisseur du film | εᵢₙᵢₜᵢₐₗ | Trans. lum. (TL) | Flou | Test HH (50 jours) | | | | Variation après Test SO₂ (1 cycle) | | | Test BSN | | | | | Test résistance à l'arrachement |
|---|---|---|---|---|---|---|---|---|---|---|---|---|---|---|---|---|---|
| Résine (exemple) | [µm] | [%] | [%] | Aspect | Δε | ΔE* | ΔTL | aspect visuel | Δε | ΔTL | aspect visuel | Jours | Δε | ΔE* | ΔTL | aspect visuel | Classification Tableau 1 de la norme |
| Référence | 0 | 4 | 88 | transparent | 5,9 | 0,37 | -1,5 | NOK | -0,1 | -2,6 | NOK | 10 | 7,3 | 3,8 | -1,5 | NOK | - |
| Polysilazane inorganique (exemple 1) | 2 | 42 | 82 | transparent | * | * | * | * | 2,5 | 1 | NOK | 4 | 13,5 | 4,2 | 2 | NOK | 0 |
| | 5 | 48 | 81 | transparent | * | * | * | * | * | * | * | 4 | 17,6 | 3,8 | 1.5 | NOK | 0 |
| Polysilazane organique (exemple 2) | 1 | 14 | * | transparent | * | * | * | * | -1 | -1,3 | NOK | 11,5 | 0 | 11,9 | 0.1 | OK | 0 |
| | 5 | 61 | 81 | transparent | * | * | * | * | * | * | * | 21 | 0,1 | 0,4 | 0.8 | OK | 0 |
| PSB (exemples 3 et 4) | 3 | 15 | 82 | transparent | 1,9 | 0,46 | -0,3 | OK | 0,3 | 0,1 | OK | 50 | 0,2 | 1,1 | -0,2 | OK | 0 |
| | 10 | 30 | 82 | transparent | * | * | * | * | * | * | * | * | * | * | * | * | 0 |
| PAN (exemple 5) | 7 | 21 | 81 | diffusant | * | * | * | * | * | * | * | * | * | * | * | * | 5 |
| PE (exemple 6) | Film non déposable | - | - | - | - | - | - | - | - | - | - | - | - | - | - | - | - |

| | | | | | | | | | | | | | | | | | |
|---|---|---|---|---|---|---|---|---|---|---|---|---|---|---|---|---|---|
| (*) non mesuré | | | | | | | | | | | | | | | | | |

Les résultats reportés dans le tableau 1 précédant montrent que les performances optiques, colorimétriques et énergétiques des échantillons selon les exemples 1 à 6 diffèrent sensiblement.

En particulier, on remarque que les revêtements en polysilazane inorganique (exemple 1) ne permettent pas une durabilité suffisante du vitrage, notamment aux tests BSN ou SO₂.

En outre, l'application de revêtements en polysilazane organique (exemple 2) sur l'empilement initial entraine une émissivité globale du vitrage élevée, même pour des épaisseurs de film très faible.

La mise en œuvre d'un revêtement en polyacrylonitrile (PAN) ne garantit pas non plus la durabilité du vitrage en raison des risques très importants d'arrachement du film. Le vitrage selon l'exemple 5 présente en outre un aspect diffus à la lumière (flou mesuré à 15%).

Comme indiqué précédemment, le film en polyéthylène s'avère très difficile, voire impossible, à appliquer directement sur le substrat par les techniques classiques de dépôt.

Au final, seules les configurations selon les exemples selon l'invention, utilisant un film protecteur de copolymère de styrène-butadiène, conduisent à une protection durable de l'empilement réfléchissant les infrarouges quel que soit le test pratiqué (HH, SO₂ ou BSN), tout en préservant l'essentiel des performances optiques, colorimétriques et énergétiques initiales du vitrage.

## Revendications

1. Vitrage antisolaire ou d'isolation thermique ou anticondensation, comprenant au moins un substrat, en particulier un substrat en verre, muni d'un empilement de couches minces réfléchissant le rayonnement infrarouge, dans lequel ledit empilement est recouvert d'un film polymère protecteur en un copolymère styrène-butadiène, l'épaisseur du film polymère étant inférieure à 10 micromètres.

2. Vitrage selon la revendication 1 dans lequel ledit copolymère styrène-butadiène est un copolymère constitué de blocs successifs de polystyrène et de polybutadiène.

3. Vitrage selon la revendication précédente dans lequel les blocs polybutadiène représentent entre 60 et 80% du poids du polymère.

4. Vitrage selon l'une des revendications 1 à 3 dans lequel ledit copolymère est un polymère en bloc du type poly(styrène-b-butadiène-b-styrène) (SBS) et répond à la formule développée suivante : 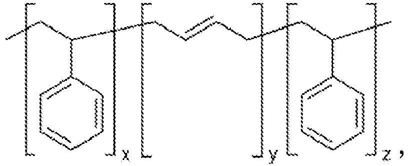 dans laquelle :
100 < x < 1000
1000 < y < 5000
100 < z < 1000, avec de préférence x = z.

5. Vitrage selon l'une des revendications précédentes dans lequel le poids moléculaire du copolymère est supérieur à 100 000 g/mol et de préférence est compris entre 100 000 et 200 000 g/mol.

6. Vitrage selon l'une des revendications précédentes dans lequel le substrat est en verre.

7. Vitrage selon l'une des revendications précédentes, dans lequel l'empilement de couches minces réfléchissant le rayonnement infrarouge comprend au moins une couche métallique choisie parmi l'argent, le cuivre, l'or et leurs alliages.

8. Vitrage selon l'une des revendications précédentes, dans lequel l'empilement de couches minces réfléchissant le rayonnement infrarouge comprend comme couche supérieure une couche diélectrique d'oxyde, de nitrure ou d'oxynitrure, de préférence d'oxyde, sur laquelle est déposé directement le film protecteur externe.

9. Vitrage selon l'une la revendication précédente, dans lequel ladite couche supérieure est un oxyde choisi parmi les oxydes de zinc, de silicium, d'étain, de titane, de zinc et d'étain.

10. Vitrage selon la revendication 8, dans lequel ladite couche supérieure est un nitrure de silicium et/ou d'aluminium.

11. Vitrage selon l'une des revendications précédentes, dans lequel l'épaisseur du film de copolymère styrène-butadiène est inférieure à 7 micromètres.

12. Vitrage selon l'une des revendications précédentes, dans lequel l'épaisseur du film de polymère styrène-butadiène est supérieure ou égale à 1 micromètre et de préférence est supérieure ou égale à 2 micromètres.

13. Vitrage simple selon l'une des revendications précédentes, comprenant un unique substrat verrier, sur lequel ledit empilement de couches minces réfléchissant le rayonnement infrarouge, recouvert d'un film polymère protecteur en polymère styrène-butadiène, est disposé sur une face externe du vitrage.

14. Vitrage multiple selon l'une des revendications 1 à 11, comprenant au moins deux substrats verriers, dans lequel l'empilement de couches minces réfléchissant le rayonnement infrarouge, recouvert d'un film en copolymère styrène-butadiène, est disposé sur une face externe du vitrage.

15. Vitrage multiple selon la revendication 13, comprenant sur une face externe un premier empilement de couches minces réfléchissant le rayonnement infrarouge, recouvert d'un film polymère protecteur en copolymère styrène-butadiène et sur une face interne un deuxième empilement de couches minces réfléchissant le rayonnement infrarouge.

16. Utilisation d'un vitrage selon l'une des revendications précédentes en tant que vitrage à fonction anticondensation, dans lequel ledit empilement de couches minces réfléchissant le rayonnement infrarouge recouvert d'un film polymère protecteur en copolymère styrène-butadiène est disposé sur une face extérieure du vitrage.

17. Utilisation d'un vitrage selon l'une des revendications précédentes en tant que vitrage à fonction antisolaire ou de contrôle thermique, dans lequel ledit empilement de couches minces réfléchissant le rayonnement infrarouge recouvert d'un film polymère protecteur en copolymère styrène-butadiène est disposé sur une face intérieure du vitrage.

## Patentansprüche

1. Sonnenschutz- oder Wärmedämm- oder Antikondensationsverglasung, umfassend mindestens ein Substrat, insbesondere ein Glassubstrat, das mit einer Stapelung Infrarotstrahlung reflektierender Dünnschichten versehen ist, wobei die Stapelung mit einer schützenden Polymerfolie aus einem Styrol-Butadien-Copolymer beschichtet ist, wobei die Dicke der Polymerfolie weniger als 10 Mikrometer beträgt.

2. Verglasung nach Anspruch 1, wobei das Styrol-Butadien-Copolymer ein Copolymer ist, das aus aufeinanderfolgenden Polystyrol- und Polybutadienblöcken besteht.

3. Verglasung nach dem vorstehenden Anspruch, wobei die Polybutadienblöcke zwischen 60 und 80 % des Polymergewichts ausmachen.

4. Verglasung nach einem der Ansprüche 1 bis 3, wobei das Copolymer ein Blockpolymer vom Typ Poly(styrol-b-butadien-b-styrol) (SBS) ist und folgender Strukturformel entspricht: 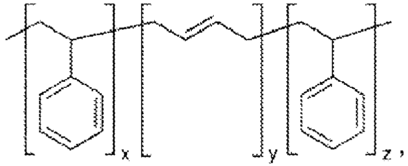 worin:
100 < x < 1000
1000 < y < 5000
100 < z < 1000, wobei vorzugsweise x = z.

5. Verglasung nach einem der vorstehenden Ansprüche, wobei das Molekulargewicht des Copolymers größer als 100.000 g/mol ist und vorzugsweise zwischen 100.000 und 200.000 g/mol liegt.

6. Verglasung nach einem der vorstehenden Ansprüche, wobei das Substrat aus Glas ist.

7. Verglasung nach einem der vorstehenden Ansprüche, wobei die Stapelung Infrarotstrahlung reflektierender Dünnschichten mindestens eine Metallschicht, ausgewählt aus Silber, Kupfer, Gold und deren Legierungen, umfasst.

8. Verglasung nach einem der vorstehenden Ansprüche, wobei die Stapelung Infrarotstrahlung reflektierender Dünnschichten als obere Schicht eine dielektrische Oxid-, Nitrid- oder Oxynitridschicht, vorzugsweise Oxidschicht, umfasst, auf der die Außenschutzfolie direkt abgeschieden ist.

9. Verglasung nach einem der vorstehenden Ansprüche, wobei die obere Schicht ein Oxid ist, ausgewählt aus Oxiden von Zink, Silicium, Zinn, Titan, Zink und Zinn.

10. Verglasung nach Anspruch 8, wobei die obere Schicht ein Nitrid von Silicium und/oder Aluminium ist.

11. Verglasung nach einem der vorstehenden Ansprüche, wobei die Dicke der Styrol-Butadien-Copolymerfolie weniger als 7 Mikrometer beträgt.

12. Verglasung nach einem der vorstehenden Ansprüche, wobei die Dicke der Styrol-Butadien-Polymerfolie größer als oder gleich 1 Mikrometer und vorzugsweise größer als oder gleich 2 Mikrometer ist.

13. Einfachverglasung nach einem der vorstehenden Ansprüche, umfassend ein einziges Glassubstrat, auf dem die Stapelung Infrarotstrahlung reflektierender Dünnschichten, die mit einer schützenden Polymerfolie aus Styrol-Butadien-Polymer beschichtet ist, auf einer Außenfläche der Verglasung angeordnet ist.

14. Mehrfachverglasung nach einem der Ansprüche 1 bis 11, umfassend mindestens zwei Glassubstrate, wobei die Stapelung Infrarotstrahlung reflektierender Dünnschichten, die mit einer Styrol-Butadien-Copolymerfolie beschichtet ist, auf einer Außenfläche der Verglasung angeordnet ist.

15. Mehrfachverglasung nach Anspruch 13, umfassend auf einer Außenfläche eine erste Stapelung Infrarotstrahlung reflektierender Dünnschichten, die mit einer schützenden Polymerfolie aus Styrol-Butadien-Copolymer beschichtet ist, und auf einer Innenfläche eine zweite Stapelung Infrarotstrahlung reflektierender Dünnschichten.

16. Verwendung einer Verglasung nach einem der vorstehenden Ansprüche als Verglasung mit Antikondensationsfunktion, wobei die Stapelung Infrarotstrahlung reflektierender Dünnschichten, die mit einer schützenden Polymerfolie aus Styrol-Butadien-Copolymer beschichtet ist, auf einer Außenfläche der Verglasung angeordnet ist.

17. Verwendung einer Verglasung nach einem der vorstehenden Ansprüche als Verglasung mit Sonnenschutz- oder Wärmeregelungsfunktion, wobei die Stapelung Infrarotstrahlung reflektierender Dünnschichten, die mit einer schützenden Polymerfolie aus Styrol-Butadien-Copolymer beschichtet ist, auf einer Innenseite der Verglasung angeordnet ist.

## Claims

1. A solar-control or thermally insulating or anticondensation glazing unit equipped with a stack of thin layers reflecting infrared radiation, in which said stack is covered with a protective polymer film made of styrene-butadiene copolymer, the thickness of the polymer film being smaller than 10 microns.

2. The glazing unit as claimed in claim 1, wherein said styrene-butadiene copolymer is a copolymer formed from successive blocks of polystyrene and polybutadiene.

3. The glazing unit as claimed in the preceding claim, wherein the polybutadiene blocks represent between 60 and 80% of the weight of the polymer.

4. The glazing unit as claimed in one of claims 1 to 3, wherein said copolymer is a block polymer of the poly(styrene-b-butadiene-b-styrene) (SBS) type and respects the following formula: 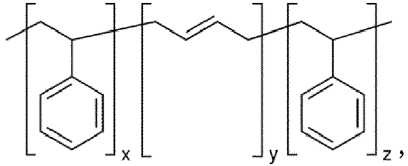 in which:
100 < x < 1000
1000 < y < 5000
100 < z < 1000, and preferably x = z.

5. The glazing unit as claimed in one of the preceding claims, wherein the molecular weight of the copolymer is higher than 100,000 g/mol and preferably is comprised between 100,000 and 200,000 g/mol.

6. The glazing unit as claimed in one of the preceding claims, in which the substrate is made of glass.

7. The glazing unit as claimed in one of the preceding claims, in which the stack of thin layers reflecting infrared radiation comprises at least one metal layer chosen from silver, copper, gold and alloys thereof.

8. The glazing unit as claimed in one of the preceding claims, in which the stack of thin layers reflecting infrared radiation comprises as top layer an oxide, nitride or oxynitride and preferably oxide dielectric layer, on which is directly deposited the external protective film.

9. The glazing unit as claimed in one the preceding claim, in which said top layer is an oxide chosen from zinc oxide, silicon oxide, tin oxide, titanium oxide, and zinc tin oxide.

10. The glazing unit as claimed in claim 8, in which said top layer is a nitride of silicon and/or aluminum.

11. The glazing unit as claimed in one of the preceding claims, in which the thickness of the polymer film made of styrene-butadiene copolymer is smaller than 7 microns.

12. The glazing unit as claimed in one of the preceding claims, in which the thickness of the polymer film made of styrene-butadiene copolymer is larger than or equal to 1 micron and preferably is larger than or equal to 2 microns.

13. A single glazing unit as claimed in one of the preceding claims, comprising a single glazing substrate, on which said stack of thin layers reflecting infrared radiation, covered with a protective polymer film made of styrene-butadiene polymer, is placed on an external face of the glazing unit.

14. A multiple glazing unit as claimed in one of claims 1 to 11, comprising at least two glazing substrates, in which the stack of thin layers reflecting infrared radiation, covered with a film made of styrene-butadiene polymer, is placed on an external face of the glazing unit.

15. The multiple glazing unit as claimed in claim 13, comprising on an external face a first stack of thin layers reflecting infrared radiation, covered with a protective polymer film made of styrene-butadiene polymer and on an internal face a second stack of thin layers reflecting infrared radiation.

16. The use of a glazing unit as claimed in one of the preceding claims as a glazing unit having an anticondensation function, in which said stack of thin layers reflecting infrared radiation covered with a protective polymer film made of styrene-butadiene polymer is placed on an exterior face of the glazing unit.

17. The use of a glazing unit as claimed in one of the preceding claims as a glazing unit having a solar-control or thermal-control function, in which said stack of thin layers reflecting infrared radiation covered with a protective polymer film made of styrene-butadiene polymer is placed on an interior face of the glazing unit.
